# DEMANDE DE BREVET EUROPEEN

(11) **EP 1 617 033 A1**
(43) Date de publication de la demande: **18.01.2006**
(21) Numéro de dépôt: 05291502.2
(22) Date de dépôt: 12.07.2005
(51) Int. Cl.: E06B 3/96

(54) **Procédé pour réaliser un chassis notamment de fenetre à partir de profilés en un matériau plastique**

(30) Priorité: 15.07.2004 FR 0407888
(71) Demandeur: SMPA, 10140 Vendeuvre-sur-Barse (FR)
(72) Inventeur: Thevenet, Yves, 71250 Chateau (FR)
(74) Mandataire: Hammond, William

(57) **Abrégé**

Procédé pour réaliser un châssis notamment de fenêtre à partir de profilés (1,2) en un matériau plastique dont les extrémités en regard coupées à 45° sont mises en contact sous pression puis soudées par chauffage. Lors de la coupe à 45° on délarde une ou des parties de l'extrémité des profilés (1,2) afin de ne pas générer de bourrelets sur la face ainsi usinée.

## Description

La présente invention est relative à un procédé pour réaliser un châssis notamment de fenêtre à partir de profilés en un matériau plastique.

Les profilés pour réaliser un châssis de fenêtre sont soit en bois, soit métalliques par exemple en aluminium, soit en un matériau plastique tel que le chlorure de polyvinyle ou PVC.

Quelle que soit la forme des profilés en PVC, leur assemblage pour réaliser un châssis comporte en général les étapes suivantes :
- on coupe les extrémités des profilés à 45°, de telle sorte que deux profilés successifs forment un angle droit ;
- on presse les profilés de façon que les extrémités soient en contact sur toute leur surface, et/ou
- on chauffe pour fondre le matériau plastique.

Ces deux dernières étapes sont en général réalisées sur une soudeuse simple, double ou à quatre têtes, afin d'obtenir le châssis en une ou plusieurs opérations.

Les opérations ci-dessus permettent d'assurer non seulement une continuité mécanique des profilés assemblés, mais aussi l'étanchéité.

Mais ce procédé de l'art antérieur présente un inconvénient : en effet sous l'effet de la chaleur et de la pression, de la matière plastique fondue se rassemble à la surface des profilés le long de la ligne de soudure, créant un bourrelet après refroidissement.

Ce bourrelet est non seulement inesthétique, mais aussi ne permet pas de revêtir les profilés notamment d'un film mélaminé (plaxage), ou d'un placage en bois : il faut donc prévoir une opération d'ébavurage sur toute la périphérie des profilés.

Aussi un des buts de la présente invention est-il de fournir un procédé pour réaliser un châssis notamment de fenêtre à partir de profilés en un matériau plastique, qui permet d'obvier aux inconvénients ci-dessus.

Un autre but de l'invention est de fournir un tel procédé qui peut être intégré facilement dans une chaîne de production traditionnelle.

Ces buts, ainsi que d'autres qui apparaîtront par la suite, sont atteints par un procédé pour réaliser un châssis notamment de fenêtre à partir de profilés en un matériau plastique dont les extrémités en regard coupées à 45° sont mises en contact sous pression puis soudées par chauffage, lequel procédé est caractérisé, selon la présente invention, par le fait que lors de la coupe à 45° on délarde une ou les parties de l'extrémité des profilés afin de ne pas générer de bourrelets sur la face ainsi usinée.

Avantageusement, au moins un des profilés en un matériau plastique est revêtu d'un placage bois sur une de ses faces.

La description qui va suivre et qui ne présente aucun caractère limitatif, doit être lue en regard des figures annexées, parmi les quelles :
- la figure 1 est une vue des profilés en perspective de l'extrémité d'un profilé revêtu d'un placage après délardage ;
- la figure 2 est une vue des profilés en perspective de deux profilés dont les extrémités sont mises en contact ; et,
- la figure 3 est une vue des profilés en perspective de deux profilés après soudage.

Le présent exemple de réalisation, tel que représenté sur les figures, concerne des profilés 1 et 2 revêtus d'un placage bois 11, 21 respectivement sur leur face qui, après assemblage, sera tournée vers l'intérieur, donc non soumis aux intempéries.

Selon l'invention, on coupe les extrémités des profilés 1 et 2 à 45° mais en réalisant par un sciage un délardage vertical 3 consistant à obtenir dans l'about à 45° du profilé une feuilure d'épaisseur et de hauteur adéquate sur la largeur de chaque profilé.

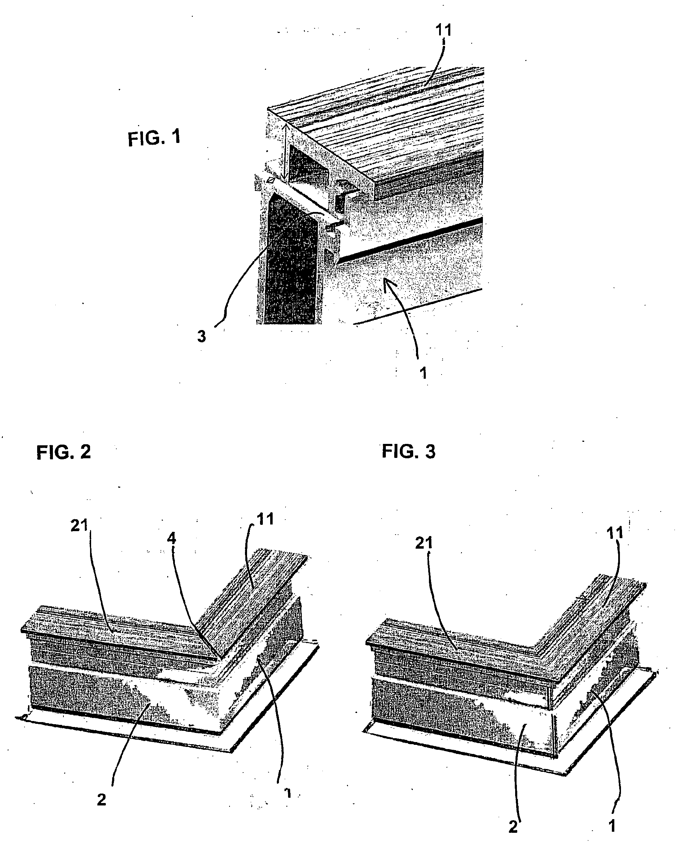

Ainsi lorsque les extrémités en regard de deux profilés successifs 1 et 2 sont mises en contact, il existera un espace 4 entre la ou les parties correspondantes, à hauteur de la feuillure pratiquée dans les extrémités du profilé, ce qui interdit le contact entre les parties lors du chauffage comme représenté à la figure 2.

Lors de la mise sous pression pour réaliser la soudure de ces deux profilés successifs 1 et 2, il ne se formera un bourrelet que sur les parties chauffées en contact et non pas sur les parties non chauffées sans contact entre elles : celles-ci, ainsi que l'aura compris l'homme du métier, seront celles en surface, donc visibles.

Le décalage, quelques millimètres, lors de la coupe ou tronçonnage et les courses de fusion des profilés lors du soudage sont aisément déterminables afin d'assurer une bonne résistance mécanique et une bonne étanchéité, comme visible sur la figure 3, permettant de le revêtir d'un film mélaminé, mais surtout d'un placage bois sans nécessiter une opération supplémentaire d'ébavurage qui laisse plus ou moins de traces inesthétiques.

## Revendications

1. Procédé pour réaliser un châssis notamment de fenêtre à partir de profilés (1, 2) en un matériau plastique dont les extrémités en regard coupées à 45° sont mises en contact sous pression puis soudées par chauffage, **caractérisé par le fait que** lors de la coupe à 45° on délarde une ou des partie(s) de l'extrémité des profilés (1, 2) afin de ne pas générer de bourrelets sur la face ainsi usinée.

2. Procédé selon la revendication 1, **caractérisé par le fait qu'**au moins un des profilés en un matériau plastique est revêtu d'un placage bois (11, 21) sur une de ses faces.
